(19) Europäisches Patentamt
European Patent Office
Office européen des brevets

(11) **EP 4 210 238 A1**

(12) **EUROPEAN PATENT APPLICATION**

(43) Date of publication:
**12.07.2023 Bulletin 2023/28**

(21) Application number: **22305012.1**

(22) Date of filing: **07.01.2022**

(51) International Patent Classification (IPC):
*H04B 7/0456* (2017.01)    *H04B 7/06* (2006.01)
*H04B 7/08* (2006.01)

(52) Cooperative Patent Classification (CPC):
**H04B 7/0695; H04B 7/0482; H04B 7/088**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Institut Mines Telecom**
**91120 Palaiseau (FR)**

(72) Inventors:
• **KTARI, Aymen**
  **94230 CACHAN (FR)**
• **GHAUCH, Hadi**
  **75013 PARIS (FR)**
• **REKAYA BEN-OTHMAN, Ghaya**
  **92160 ANTONY (FR)**

(74) Representative: **Cabinet Nony**
**11 rue Saint-Georges**
**75009 Paris (FR)**

(54) **LEARNING METHOD FOR SELECTING BEAMS IN A MILLIMETER-WAVE MIMO SYSTEM**

(57)    The disclosed invention relates to a method for selecting beams in a Millimeter-Wave MIMO system, using at least a transmitter antennas codebook indexing a plurality of beam patterns and a receiver antennas codebook indexing a plurality of beam patterns, at least one beam pattern being selected among said transmitter antennas codebook and at least one beam pattern being selected among said receiver antennas codebook, said selected beam patterns forming one or more pair of beams, said pair forming a channel for transmitting information between the transmitter and receiver antennas, with at least the following steps:
sounding only a subset of beam pairs,
measuring a transmission quality parameter of said subset of beam pairs to be indexed in an matrix,
using a learning model to select the beam pair having the maximum value of transmission quality parameter to form the channel for transmitting information between the transmitter and receiver antennas.

Fig. 3

**Description**

**Technical field**

The present invention relates to a method for finding an accurate beam alignment between beams radiated by transmitter antennas and receiver antennas in a Millimeter-Wave Multiple-Input Multiple Output (MIMO) system.

Millimeter-Wave MIMO systems are widely used in 5G and are bound to be implemented even more massively towards 6G. In such Millimeter-Wave MIMO systems, massive antennas are used at both transmitter and receiver. With such antennas, narrow beams with directional gain must be used to mitigate the severe pathloss attenuation that are inherent to Millimeter-Wave propagation. Moreover, in such system comprising a large number of antennas, the narrow transmitter and receiver beams are chosen from large codebooks indexing a plurality of beams.

The beams chosen at both the transmitter and the receiver need to be well aligned to form a channel having a high Signal to Noise Ratio (SNR), which is required to establish a link between the transmitter side and the receiver side.

**Prior art**

In known methods, in order to find a well aligned pair of beams, an exhaustive search is realized. To do so, one proceeds by sounding all beams available in both transmitter and receiver codebooks and by searching for the beam pair that yields the largest SNR. The main drawback of this method is the fact that the resulting signalling overhead, needed to sound both transmitter and receiver codebooks, scales as the product of the codebook sizes, i.e. the number of beam patterns indexed in the codebook. While this method may be adapted for small codebooks size, for example for LTE or Wi-Fi standards, its signalling overhead becomes prohibitive for Massive Millimeter-Wave MIMO systems where the size of the codebooks may be superior to $32 \times 32$.

There is a need for a method for finding the best beam pair, i.e. one beam from the transmitter codebook and one beam from the receiver codebook that maximize the SNR, which is adapted to massive antennas and codebooks with large sizes through a blind approach, i.e., without needing channel state information, neither at the transmitter nor at the receiver.

The present invention notably seeks to meet this need.

**Disclosure of the invention**

One subject of the invention is a method for selecting beams in a Massive Millimeter-Wave MIMO system, the method using at least a transmitter antennas codebook indexing a plurality of beam patterns and a receiver antennas codebook indexing a plurality of beam patterns, at least one beam pattern being selected among said transmitter antennas codebook and at least one beam pattern being selected among said receiver antennas codebook, said selected beam patterns forming one or more pair of beams, said pair forming a channel for transmitting information between the transmitter antennas and the receiver antennas,

the method comprising at least the following steps:

a. sounding only a subset of beam pairs chosen among a set of all possible combinations of beam patterns of the transmitter and the receiver antennas codebooks forming beam pairs,

b. measuring a transmission quality parameter of said subset of beam pairs previously sounded to be denoted by a matrix (S),

c. applying a learning model on said subset of sounded beam pairs and/or on a predefined training set of beams, to determine at least two latent vectors corresponding to the factorization of said matrix (S),

d. using said at least previously determined two latent vectors to predict values of said transmission quality parameter of unsounded beam pairs and complete said matrix (S), and

e. comparing all values of said transmission quality parameter of said matrix (S) and selecting the beam pair having the maximum value of transmission quality parameter to form the channel for transmitting information between the transmitter antennas and the receiver antennas.

The transmission quality parameter may be the Signal to Noise Ratio (SNR) and/or the Received Signal Energy (RSE).

The method according to the invention allows sounding less beam pairs than the methods used in the prior art while still being able to find the best pair of beams, thereby significantly reducing the signalling overhead.

By sounding only a subset of beams pairs, the search for an aligned pair of beams is less computationally complex, allows the reduction of the signalling overhead, and a low hardware complexity

Contrary to the exhaustive search method, the method according to the invention is well adapted for communication between massive antennas used in Millimeter-Wave MIMO systems for example.

The subset of sounded beam pairs may be used as a training set to train the learning model. The rest of the beam pairs may be used as a test set. It is therefore not necessary to have access to a previously acquired dataset.

Latent vectors determined by the learning model may be saved in a database. This allows restoring almost instantly the latent vectors from the database at any time without necessitating a hyperparameters cross-validation.

In order to evaluate the performance of the used learning model, the prediction quality of the model may be compared to the exhaustive search.

Both the transmitter and the receiver antennas may be connected to at least one radio frequency (RF) chain, in particular to one radio frequency (RF) chain, resulting in fully analog architecture used at both transmitter and receiver. We may not use digital precoding or combining. The architecture of the system thus has a low hardware complexity.

The applied learning model may be a matrix factorization model and/or a non-negative matrix factorization model.

In another embodiment, the learning model may be performed by a deep neural network and/or by a convolutional neural network. The learning model may be an Auto Encoder or a Multi-Layer Perceptron.

Using matrix factorization model and/or non-negative matrix factorization model allows offline training and predicting accurately through a mmWave coherence time in which the channel remains static. The hyper parameters cross validation of those models is completely done offline and results in storing the optimal latent vectors and the optimal hyper parameters for different setup combinations in dedicated datasets

The subset of beam pairs may correspond to at most 90%, better at most 75%, better at most 50%, better, at most 30%, better at most 20%, for example in the order of 10% of the set of all possible beam pairs of the combinations of beams patterns of the transmitter and the receiver antennas codebooks.

The method according to the invention allows predicting with a high accuracy the SNR of all the pairs of beams by sounding only 10% of the possible pairs of beams.

The number of sounded beam pairs may depend on the number of indexed beam patterns in each codebook. The more indexed beam patterns there are in each codebook, the lower the ratio between the number of sounded beam pairs and the number of all possible beam pairs is. On the opposite, the less indexed beam patterns there are in each codebook, the higher the ratio between the number of sounded beam pairs and the number of all possible beam pairs is. (?)

The state information of the channel transmitting information between the transmitter antennas and the receiver antennas may be unknown and/or known.

Contrary to some known methods, a blind approach, i.e. an approach where the channel state information is unknown and/or known, is compatible with the method according to the invention. There is no need to have any knowledge of the channel state information, neither at the transmitter nor at the receiver.

This allows to easily implement the method in a large number of Millimeter-Wave MIMO systems. Moreover, this allows to reduce the computation time and memory required to perform the process according to the invention.

The channel may be quasi static while the method is applied, i.e. the channel remains unchanged during the coherence time.

The SNR for each pair of beams may be approximated by the Received Signal Energy (RSE).

When the channel state information is unknown, one may make this approximation. This allows simplifying the step of measuring the SNR of said subset of previously sounded beam pairs. The method according to the invention is therefore easier to implement.

Each codebook may have more than 16, better more than 32, better more than 64, better more than 128, better more than 256, better more than 512, better more than 1024 indexed beam patterns.

The exhaustive search of the prior art can operate for communication protocols having a small number of indexed beam patterns in the codebook of the antennas. For example, in LTE protocol, each codebook has 8 indexed beam patterns. The number of beams to sound is thus only 64.

However, for standards using massive antennas such as 5G or 6G, the number of indexed beam patterns in each antenna may be superior to 16 or even more. The number of beams to sound to perform an exhaustive search would therefore be superior to 256. In this case, the number of sounded beams required by an exhaustive search is very high and this conventional method is not efficient.

The method according to the invention is especially suited for codebooks having a high number of indexed beam patterns.

The matrix (S) may be a low rank matrix.

By *"low rank matrix"*, it has to be understood a matrix having a rank smaller than its number of rows or column, for example less than 3 better less than 2, even better less than 1.

The minimal number of data required in a training set may be proportional to the rank of the matrix (S). Having a low rank matrix allows having a small training set and therefore sounding only a small number of beams.

The dimension (D) illustrating the model complexity representing the number of latent factors of the matrix factorization model may be smaller than the dimensions, which correspond to the number of rows and columns, of the matrix (S).

Coefficients of said at least two latent vectors may be determined by using a Block Gradient Descent and/or a Block Coordinate Descent method.

The standard for transmitting information on the channel for transmitting information between the transmitter antennas and the receiver antennas may be 5G or 6G.

Said method according to the invention is advantageously performed by means of computer programs, automatically running on any electronic device comprising a processor, as a mobile phone, a tablet, or a computer, mobile or fixe.

According to another aspect, the invention also relates to a computer program product for selecting beams in a Millimeter-Wave MIMO system, using at least a transmitter antennas codebook indexing a plurality of beam patterns and a receiver antennas codebook indexing a plurality of beam patterns, at least one beam pattern being selected among said transmitter antennas codebook and at least one beam pattern being selected among said receiver antennas codebook, said selected beam patterns forming one or more pair of beams, said pair forming a channel for transmitting information between the transmitter antennas and the receiver antennas,

the computer program product comprising a support and stored on this support instructions that can be read by a processor, these instructions being configured to:

> a. Sound only a subset of beam pairs chosen among a set of all possible combinations of beam patterns of the transmitter and the receiver antennas codebooks forming beam pairs,
> b. Measure the value of a transmission quality parameter, in particular the Signal to Noise Ratio (SNR), of said subset of beam pairs previously sounded to be indexed in an matrix (S),
> c. Apply a learning model on said subset of sounded beam pairs and/or on a predefined training set of beams, to determine at least two latent vectors corresponding to the factorization of said matrix (S),
> d. Use said at least previously determined two latent vectors to predict values of the transmission quality parameter of unsounded beam pairs and complete said matrix (S), and
> e. Compare all values of the transmission quality parameter of said matrix (S) and selecting the beam pair having the maximum value of the transmission quality parameter to form the channel for transmitting information between the transmitter antennas and the receiver antennas.

The features described above in relation with the method apply to the computer program product.

## Brief description of the drawings

The invention may be better understood upon reading the following detailed description of non-limiting implementation examples thereof and upon studying the appended drawing, in which:

> Figure 1 is a schematic representation of an example of a Millimeter-Wave MIMO system,
> Figure 2 is a schematic representation of the radio frequency chains connected to the transmitter and the receiver,
> Figure 3 illustrate a matrix resulting from a conventional exhaustive search,
> Figure 4 illustrate a matrix obtained from a method according to the invention,
> Figure 5 illustrate a decomposition of a matrix in two rectangular matrixes illustrating the latent factors of the Matrix Factorization models and
> Figure 6 is block diagram of the different steps of a method according to the invention.

## Detailed description

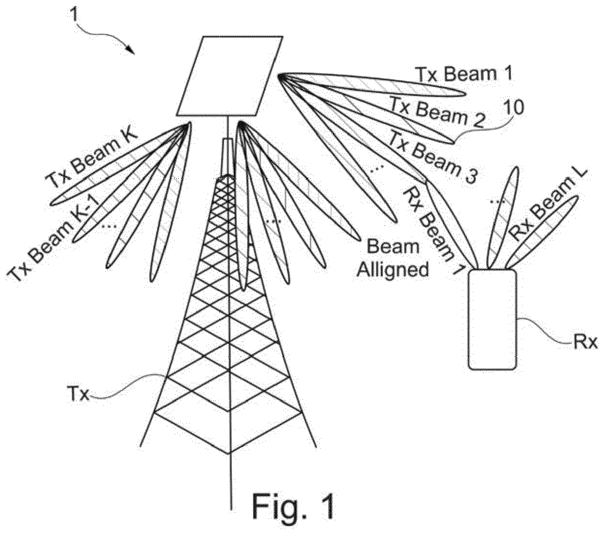

A Millimeter-Wave MIMO system 1 is represented on figure 1. The latter comprises a transmitter Tx comprising several transmitter antennas and a receiver Rx comprising several receiver antennas. In the illustrated example, the transmitter Tx is a base station, and the receiver Rx is a user terminal. Each antenna radiates along a beam 10. Both the transmitter Tx and the receiver Rx have a codebook of potentially feasible beams.

When two beams 10 are aligned, one from the transmitter side and one from the receiver side, a communication channel is established, and information may be transmitted from the transmitter to the receiver. On the example of figure 1, the transmitter beam Tx beam 3 is aligned with the receiver beam Rx beam 1.

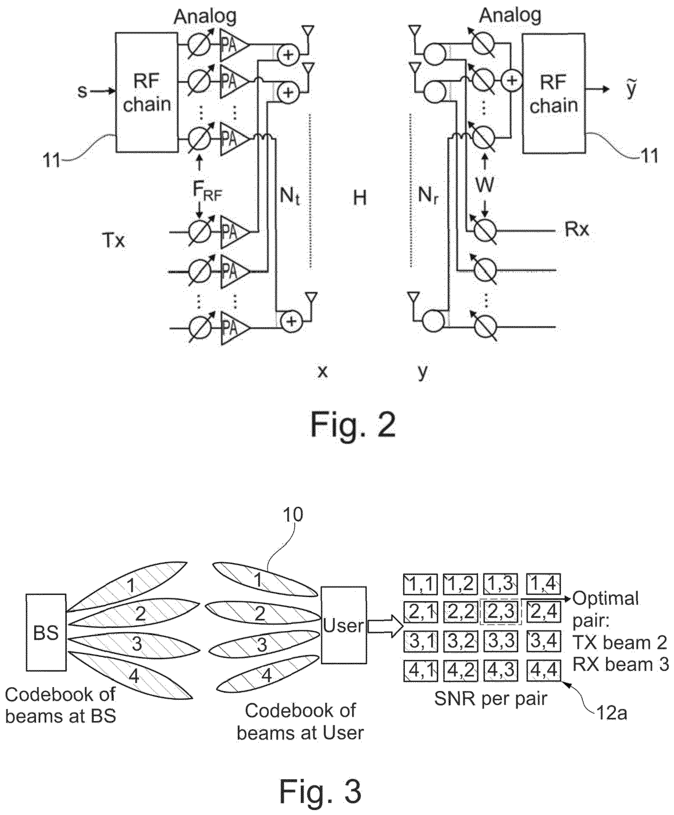

As can be seen on figure 2, both the transmitter and the receiver antennas may be connected to one radio frequency chain 11, resulting in full-analog architecture used at both transmitter and receiver.

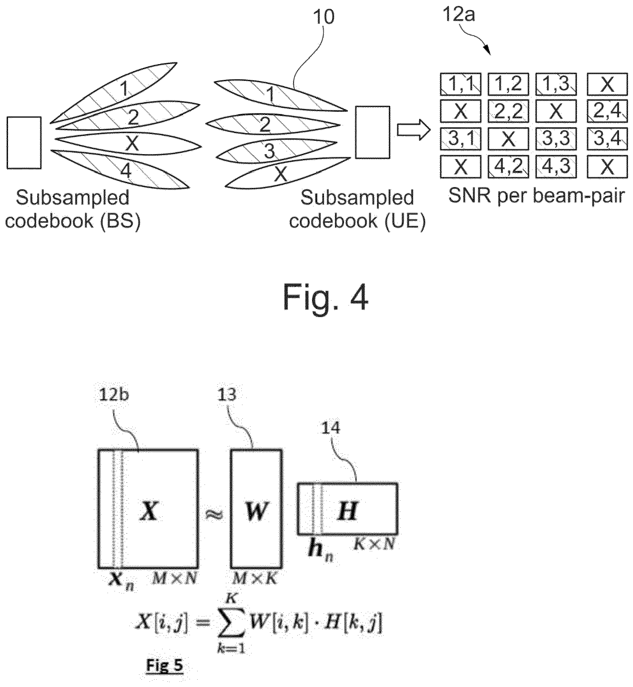

In the examples of figure 3 and 4, each codebook of the transmitter and the receiver indexes four beam patterns 10.

Figure 3 illustrates the matrix 12a resulting from an exhaustive search used in the prior art. In this method, all beams 10 are sounded and the SNR of all sixteen channels formed by the combination of beams is evaluated. The matrix 12a does not have unknown coefficients. Based on this matrix 12a, it is possible to determine the highest SNR value. The optimal pair of beams, i.e. the pair of beams forming a channel allowing the best quality for exchanging information between the transmitter and the receiver, is the one providing the highest SNR. This method required to sound sixteen beams.

Figure 4 illustrates the matrix 12b resulting from the method of the invention. In this method, only a subset of beams 10 are sounded. In the illustrated example, only three beams 10 are sounded on each side and the SNR of the nine channels formed by the combination of beams is evaluated. In the matrix 12b, six coefficients are unknown.

In order to determine the highest SNR and therefore to select the pair of beams corresponding to this highest SNR, it is necessary to fill the matrix 12b. To do so, the method of the invention is based on the prediction of said unknown coefficients by applying a learning model to determine at least two latent vectors corresponding to the factorization of said matrix.

A learning model that may be applied is a matrix factorization model and/or a non-negative matrix factorization model. By applying such model, the matrix may be decomposed in matrixes having smaller dimensions.

Figure 5 is an example of the decomposition of the matrix 12b determined by applying the learning model. The matrix 12b is decomposed in a matrix 13 corresponding to the latent vectors and a matrix 14 representing the channel, **[to be confirmed]**

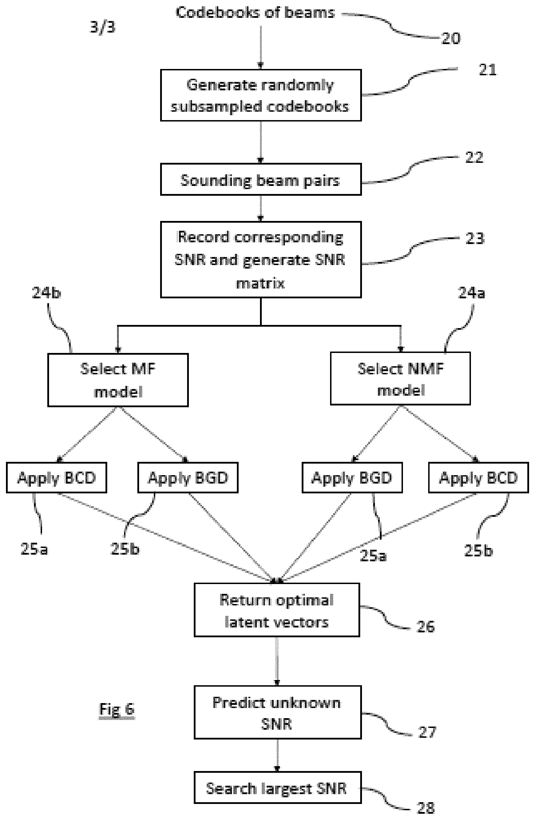

We will now explain in reference to figure 6 an embodiment of the method according to the invention.

We consider a Millimeter Wave Massive MIMO system, where a transmitter Tx and a receiver Rx, equipped with respectively $N_T$ and $N_R$ antennas, wish to select an optimal aligned pair of beams. The transmitter and the receiver are each connected to one radio frequency chain. Therefore, the architecture is a low-complexity and low-energy architecture.

The transmitter chooses its analog beamformer $f_u$ from a codebook T of potentially feasible beam patterns.

$$f_u \in \mathbb{C}^{N_T}, u \in T$$

Similarly, the receiver chooses its analog beamformer wi from a codebook R of potentially feasible beam patterns.

$$w_i \in \mathbb{C}^{N_R}, i \in R$$

We denote by $C_T = |T|$, and $C_R = |R|$ the cardinality of codebook at the transmitter and the receiver respectively. Thus, the transmitter and the receiver beams satisfy the constant modulus constraints:

$$f_u \in \mathbb{C}^{N_T} \ , \ |\,[\,f_u\,]_t\,| = (N_T)^{-1} \ , \ \forall\, t \in \{1,...,N_T\}$$

$$w_i \in \mathbb{C}^{N_R} \ , \ |\,[\,w_i\,]_r\,| = (N_R)^{-1} \ , \ \forall\, r \in \{1,...,N_R\}$$

where |x| is the absolute value of x and $[x]_t$ is entry t of a vector x.

Hereafter, we define beam-pair $(u; i) \in T \times R$, as beam $u \in T$ from the transmitter codebook, and beam $w \in R$ from the receiver codebook.

Moreover, the signal at the receiver corresponding to the beam pair (u; i) is given by:

$$y_{u,i} = w_i^H H f_u s_u + \tilde{n}_i, \ \forall\, (u,i) \in \mathcal{T} \times \mathcal{R},$$

where $s_u = 1\sqrt{P_u}$ is the pilot symbol associated with $f_u$ (with power $P_u$), and $\tilde{n}_l = w_i^H n$ is the zero mean additive white Gaussian noise with unit variance $\widetilde{\sigma_l^2} = 1$. We denote the matrix representing the MIMO channel by

$$H \in \mathbb{C}^{N_R \times N_T}$$

The MIMO channel may be a narrow- or wide-band channel model. The matrix representing the MIMO channel has a rank L = rank(H), where L << ($N_T$, $N_R$).

We further assume that H is quasi static during the beam alignment procedure, and that H is completely unknown to both the transmitter and the receiver.

The first step 21 of the method according to the invention is to generate randomly from codebooks of beam patterns 20 of the transmitter and the receiver a subsample of each codebooks. The transmitter subsample codebook is denoted $T_S$ and the receiver subsample codebook is denoted $R_S$. The subsampled codebooks verify $R_S$ C R and $T_S$ C T. The subsampled codebooks are chosen to have small sizes, i.e., $|R_S|$<< $|R|$ and $|T_S|$ << $|T|$. The subsample codebook $T_S \times R_S$ corresponds to the combination of the two codebooks $T_S$ and $R_S$.

A next step 22 is to sound beam pairs of the subsampled codebooks $T_S$ and $R_S$ generated on the previous step 21.

After sounding only a subset of beams pairs, the step 23 of recording in a matrix values of SNR corresponding to channels formed by each pairs is performed.

We define the received SNR for the beam-pair (u; i) as:

$$\mathrm{SNR}_{u,i} = P_u |w_i^H H f_u|^2, \ \forall \, (u,i) \in \mathcal{T} \times \mathcal{R}$$

However, because we assume that the channel state information is unknown, the receiver is unable to compute the SNR. Instead, the SNR at the receiver is approximated by the Received Signal Energy (RSE). The RSE being defined as follow:

$$\gamma_{u,i} = |y_{u,i}|^2, \ \forall (u,i) \in \mathcal{T} \times \mathcal{R},$$

In particular, for evaluating the RSE, there is no need to know the values of H, $f_u$, $P_u$.

We assume that the RSE is close to the true SNR for each beam-pair. Therefore the selected beam pair ($u^*$, $i^*$) is the one leading to the maximal RSE:

$$(u^\star, i^\star) \ = \ \underset{(u,i) \in \mathcal{T} \times \mathcal{R}}{\mathrm{argmax}} \ \gamma_{u,i}$$

Instead of sounding the entire transmitter and receiver codebooks, as it is done in exhaustive beam alignment method, a subsampled codebooks of beam pairs are used.

We denote a beam pair (u; i) as the combination of beamforming vector u in the transmitter codebook of beam patterns and combining vector i in the receiver codebook of beam patterns.

We then sound only beam pairs from subsampled codebook $T_S \times R_S$. The RSE (corresponding to the SNR) of beam pair (u; i), from the subsampled codebooks $T_S \times R_S$, is expressed as:

$$\gamma_{u,i} := \ | \ y_{u,i} \ |_2^2 \ \forall \, (u,i) \in \mathcal{T}_S \times \mathcal{R}_S$$

where $y_{u,i}$ is the receiver signal resulting from beam-pair (u; i).

We can then define the following incomplete SNR matrix $S \in \mathbb{R}^{C_T \times C_R}$ as:

$$[ S ]_{u,i} := \begin{cases} \mathrm{SNR}_{u,i} & , \ \mathrm{if} \ (u,i) \in \mathcal{T}_S \times \mathcal{R}_S \\ \mathrm{unknown} & , \ \mathrm{if} \ (u,i) \notin \mathcal{T}_S \times \mathcal{R}_S \end{cases}$$

where $[S]_{u,i}, \forall (u, i) \in T \times R$ denotes element (u; i) of S.

The receiver can evaluate the SNR of entries in S that correspond to the subsampled codebook TS × RS because they have been sounded.

The known SNR, i.e. SNR of the beam pairs that were sounded, are used as a training set K for a learning model. The training set K is defined as the beam pairs indexed in the subsampled codebook, $K := \{(u; i) \mid (u; i) \in T_S \times R_S\}$.

The learning model applied may be a Matrix Factorisation model (MF model) or a Non-Matrix Factorization Model (NMF).

The following describe the case where a MF model is selected, corresponding to step 24a on figure 6.

The training set K is used to learn a MF model, preferably a low-rank MF model. After the learning, the MF model is applied to predict the SNR of entries in S that are labelled 'unknown'.

The low-rank MF model allows to model the SNR of the sounded beam-pairs (i.e., entries of S that are known), as an inner product between two D-dimensional latent vectors, $\theta_u$, $\psi_i$.

Thus, the SNR of beam-pair (u; i) is modelled as:

$$SNR_{u,i} = [\boldsymbol{S}]_{u,i} := \boldsymbol{\theta}_u^T \boldsymbol{\psi}_i \,, \boldsymbol{\theta}_u \in \mathbb{R}^D \,,\ \boldsymbol{\psi}_i \ \in \ \mathbb{R}^D,$$
$$\forall\ (u, i) \in \mathcal{K}(:= \mathcal{T}_S \times \mathcal{R}_S)$$

where D is the dimension of the MF model. Due to the low-rank MF model, D is assumed to be smaller than the dimensions of S, i.e., $D \ll (C_T, C_R)$.

The goal of the MF method is to learn the latent vectors, $\{\theta_u, \psi_i\}$ (u, i) $_{\in K}$ corresponding to entries of S that are known.

Learning the latent vectors, $\theta_u$, $\psi_i$ corresponding to sample (u; i), of the training set K, is formulated as:

$$\ell_{u,i}(\boldsymbol{\theta}_u, \boldsymbol{\psi}_i) := \left( [\boldsymbol{S}]_{u,i} - \boldsymbol{\theta}_u^T \boldsymbol{\psi}_i \right)^2 = \left( SNR_{u,i} - \boldsymbol{\theta}_u^T \boldsymbol{\psi}_i \right)^2$$

where $1_{u,i}(\theta_u, \psi_i)$ is the loss function of the sample (u; i) of the training set K.

Then, we sum over all the samples (u; i) of the training set K, to get the total loss function, and express the optimization problem (P) resulting, as:

$$(P) : \{\widehat{\boldsymbol{\theta}}_u, \widehat{\boldsymbol{\psi}}_i\} \quad \begin{cases} \underset{\{\boldsymbol{\theta}_u, \boldsymbol{\psi}_i\}_{(u,i)\in\mathcal{K}}}{\mathbf{argmin}} \quad \sum_{(u,i)\in\mathcal{K}} \ell_{u,i}(\boldsymbol{\theta}_u, \boldsymbol{\psi}_i) \\ \text{s. t. } \boldsymbol{\theta}_u \ \in \ \mathbb{R}^D, \ \boldsymbol{\psi}_i \ \in \ \mathbb{R}^D \end{cases}$$

where the cost function of (P) is defined as:

$$\sum_{(u,i)\in\mathcal{K}} \ell_{u,i}(\boldsymbol{\theta}_u, \boldsymbol{\psi}_i) = \sum_{(u,i)\in\mathcal{K}} \left( [S]_{u,i} - \boldsymbol{\theta}_u^T \boldsymbol{\psi}_i \right)^2$$

In the above problem (P), the SNR of the sounded beam-pairs are known, $\{[S]_{u,i} \mid \forall (u,i) \in K\}$, and the optimization variables that need to be learned are the latent vectors corresponding the training set $\{ \theta_u, \psi_i \mid \forall (u,i) \in K \}$.

In another embodiment, the learning model selected may be a NMF model, corresponding to step 24b on figure 6. The step for applying a NMF model are the same as for applying a MF model. The difference is that in a NMF model, the latent vectors are constraint to be non-negative.

In this NMF model, the SNR of beam pairs is given by:

$$SNR_{u,i} = [S]_{u,i} := \boldsymbol{\theta}_u^T \boldsymbol{\psi}_i \ , \boldsymbol{\theta}_u \in \mathbb{R}_+^D \ , \ \boldsymbol{\psi}_i \in \mathbb{R}_+^D,$$

$$\forall \, (u, i) \in \mathcal{K}(:= \mathcal{T}_S \times \mathcal{R}_S)$$

We express the optimization problem (P1) corresponding to the NMF problem, as follows:

$$(P1) : \{\widehat{\boldsymbol{\theta}}_u, \widehat{\boldsymbol{\psi}}_i\} \quad \begin{cases} \underset{\{\boldsymbol{\theta}_u, \boldsymbol{\psi}_i\}_{(u,i) \in \mathcal{K}}}{\text{argmin}} \ \sum_{(u,i) \in \mathcal{K}} \ell_{u,i}(\boldsymbol{\theta}_u, \boldsymbol{\psi}_i) \\ \text{s. t. } \boldsymbol{\theta}_u \geq 0 \ , \ \boldsymbol{\psi}_i \geq 0 \end{cases}$$

where 0 is the all-zero vector of dimension D and the cost function of the problem (P1) is the same as that of problem (P) for MF model.
Both (P) and (P1) are non-convex optimization problems.
The overhead ratio is defined as:

$$\eta = \frac{overhead \ with \ the \ method \ of \ the \ invention}{overhead \ of \ exhaustive \ search} = \frac{|T_S| \times |R_S|}{|T| \times |R|},$$

where $0 < \eta < 1$.
It measures the signalling overhead of all the method of the invention compared to that of exhaustive search. The smaller the value of $\eta$ is, the smaller the signalling overhead is. However, a low $\eta$ implies that the size of the training set is small and consequently, the prediction error is large. Thus, there is a trade-off between $\eta$ and the prediction error.
The total cost function of both problems (P) and (P1) may be rewritten as follow:

$$\sum_{(u,i) \in \mathcal{K}} \left[ \left( [S]_{u,i} - \boldsymbol{\theta}_u^T \boldsymbol{\psi}_i \right)^2 + \lambda_i \|\boldsymbol{\psi}_i\|_2^2 + \mu_u \|\boldsymbol{\theta}_u\|_2^2 \right]$$

Where $\{\lambda_i \geq 0, \mu_u \geq 0 \mid \forall \, (u,i) \in K\}$ is the set of regularization hyperparameters to balance the MF or NMF model in order to prevent overfitting or underfitting. These hyperparameters are optimized by offline cross validation search.
After selecting a MF model at step 24a, the problem (P) may be solved by using a Block Coordinate Descent (BCD) method, step 25a or by using a Block Gradient Descent (BGD), step 25b on figure 6.
If a BCD method is applied, one block of variables is iteratively optimized, and all the remaining ones are assumed to be known.
Each block is considered as being convex. Thus, the solution of the MF problem is unique, and can be derived in closed form, as:

$$\begin{cases} \boldsymbol{\psi}_i^{(k+1)} & = (\boldsymbol{\theta}_u^{(k)} (\boldsymbol{\theta}_u^{(k)})^T + \lambda_i \mathbf{I})^{-1} \boldsymbol{\theta}_u^{(k)} [S]_{u,i}/2 \\ \boldsymbol{\theta}_u^{(k+1)} & = (\boldsymbol{\psi}_i^{(k+1)} (\boldsymbol{\psi}_i^{(k+1)})^T + \mu_u \mathbf{I})^{-1} \boldsymbol{\psi}_i^{(k+1)} [S]_{u,i}/2 \end{cases}$$

$$\forall (u, i) \in \mathcal{K} \ , \ k = 0, 1, ..., I_M$$

where (k) is the iterations index and I is the DxD identity matrix.

Moreover, the optimal latent vectors solution $\left\{\widehat{\theta_u}, \widehat{\psi_i}\right\}_{(u,i)\epsilon K}$ is obtained when the distance between consecutive iteration reaches a predefined number $\varepsilon$, or reach a maximum number of iterations, $I_M$. The sequence of updates $\left\{\theta_u^{(k)}, \psi_i^{(k)} \mid \forall\, (u,i) \in K\right\}_k$ generated by BCD equation above is non-increasing and converge to a stationary point as $k \to \infty$.

If a BGD method is applied, instead of having a closed form solution for each block (which incurs a significant complexity), BGD proceeds by taking T gradients steps, for each block, i.e.

$$\begin{cases} \psi_i^{(k+1)} &= \psi_i^{(k)} + 2\alpha^{(k)}(([S]_{u,i} - \theta_u^T\psi_i)\theta_u^{(k)} - \lambda_i\psi_i^{(k)}) \\ \theta_u^{(k+1)} &= \theta_u^{(k)} + 2\alpha^{(k)}(([S]_{u,i} - \theta_u^T\psi_i)\psi_i^{(k)} - \mu_u\theta_u^{(k)}) \end{cases}$$
$$\forall(u,i) \in \mathcal{K} \ , \ k = 0, 1, ..., T,$$

where (k) is the iterations index, and $\alpha^{(k)}$ is the step size with ($0 < \alpha^{(k)} < 1$).

If a NMF model is selected, the problem (P1) may also be solved by using a Block Coordinate Descent (BCD) method, step 25a or by using a Block Gradient Descent (BGD), step 25b .

The BCD and BGD methods are applied in a similar way as when a MF method is applied as described above.

The equations solution of the NMF problem (P1) solved by a BCD method is:

$$\begin{cases} \psi_i^{(k+1)} &= \left[(\theta_u^{(k)}(\theta_u^{(k)})^T + \lambda_i\mathbf{I})^{-1}\theta_u^{(k)}[S]_{u,i}/2\right]_+ \\ \theta_u^{(k+1)} &= \left[(\psi_i^{(k+1)}(\psi_i^{(k+1)})^T + \mu_u\mathbf{I})^{-1}\psi_i^{(k+1)}[S]_{u,i}/2\right]_+ \end{cases}$$
$$\forall(u,i) \in \mathcal{K} \ , \ k = 0, 1, ..., I_M$$

Where (k) is the BCD iteration index, [a]+ = max (a,0) is applied element-by-element on a, i.e., a Euclidean projection of a on $\mathbb{R}_+^D$ . The equation solution of BCD for NMF are the same as those of BCD for MF, followed by a projection operation on $\mathbb{R}_+^D$ .

The equations solution of the NMF problem (P1) solved by a BGD method is:

$$\begin{cases} \psi_i^{(k+1)} &= [\psi_i^{(k)} + 2\alpha^{(k)}(([S]_{u,i} - \theta_u^T\psi_i)\theta_u^{(k)} - \lambda_i\psi_i^{(k)})]_+ \\ \theta_u^{(k+1)} &= [\theta_u^{(k)} + 2\alpha^{(k)}(([S]_{u,i} - \theta_u^T\psi_i)\psi_i^{(k)} - \mu_u\theta_u^{(k)})]_+ \end{cases}$$
$$\forall(u,i) \in \mathcal{K} \ , \ k = 0, 1, ..., T,$$

where (k) is the iterations index, and $\alpha^{(k)}$ is the step size with ($0 < \alpha^{(k)} < 1$).

The application of BCD and/or BGD allows to determine the optimal latent vectors $\left\{\widehat{\theta_u}, \widehat{\psi_i}\right\}$ and to return it to the learning model during step 26.

After obtaining the optimal latent vectors by solving the MF problem (P), or the NMF problem (PI), we use these optimal latent vectors, to perform the step 27 of predicting the SNR of beam pairs which were not sounded.

The predicted SNR of beam-pair (u; i) for beam pairs that were not sounded, is defined as:

$$\{\widehat{SNR}_{u,i} := (\hat{\boldsymbol{\theta}}_u)^T \hat{\boldsymbol{\psi}}_i \mid \forall (u,i) \in \mathcal{L}\}$$

where L is the test set, that satisfies $L \cup K = \{\}$, $L \cap K = T \times R$.

The predicted SNR are used to fill the matrix which was incomplete.

Finally, we search for the highest SNR in the matrix, step 28, to select the optimal beam-pair. The highest SNR is searched over both the training set K and test set L.

The highest SNR is defined as follow:

$$(u^\star, i^\star) = \text{argmax}_{(u,i) \in \mathcal{L} \cup \mathcal{K}} \ (\hat{\boldsymbol{\theta}}_u)^T \hat{\boldsymbol{\psi}}_i.$$

Then, $f_u*$ and $w_i*$ are used as the transmitter and the receiver beams for the data transmission.

Example

In the following example, the below algorithm is performed.

---

**Algorithm 1 Proposed MF/NMF-based BA Method**

Input: $\{f_u\}_{\forall u \in \mathcal{T}}, \{w_i\}_{\forall i \in \mathcal{R}}, \eta$
- Generate randomly subsamp. codebooks, $\mathcal{T}_S, \mathcal{R}_S$, satisfying $(|\mathcal{T}_S|.|\mathcal{R}_S|)/(|\mathcal{T}| \times |\mathcal{R}|) = \eta$
- Sound beam-pairs from training set, $\mathcal{K} := \mathcal{T}_S \times \mathcal{R}_S$.
- Record corresp RSE, $\gamma_{u,i}$, and generate RSE mat. $\boldsymbol{S}$
- Select model: MF or NMF
- IF MF model selected
  solve $(P)$ with BCD for MF,
  or solve $(P)$ with BGD for MF,
  at end of training, return optimal latent vectors, $\{\hat{\boldsymbol{\theta}}_u, \hat{\boldsymbol{\psi}}_i\}_{(u,i) \in \mathcal{K}}$
- IF NMF model selected
  solve $(P1)$ with BCD for NMF,
  or solve $(P1)$ with BGD for NMF,
  at end of training, return optim latent vectors, $\{\hat{\boldsymbol{\theta}}_u, \hat{\boldsymbol{\psi}}_i\}_{(u,i) \in \mathcal{K}}$
- Use optim latent vectors $\{\hat{\boldsymbol{\theta}}_u, \hat{\boldsymbol{\psi}}_i\}_{(u,i) \in \mathcal{K}}$, to predict unknown SNR of test set, $\mathcal{L}$,
- Search training and test sets, for beam-pair w/ largest SNR,
Output: $f_{u^*}, w_{i^*}$

---

In this example, the number of transmitter and receiver antennas simulated are in range 16, 32, 64, 128, 256, 512, 1024. The overhead ratio is in range (0.7, 0.6, 0.5). The trade-off to be solved is to find the lowest overhead value that gives an accurate prediction, i.e. a low prediction error, of the beam pairs corresponding to the highest SNR value. Therefore, low overhead ratio configurations still giving accurate results confirms that we can select the best beam pair in large dimension dataset matrices without the conventional need of sounding all the beams.

For MF and NMF computations, we used 2 algorithms: BCD, also known as the Alternating Least Squares, and BGD. We evaluate the performance of four models in total:

- MF with BCD (MF_ALS),
- MF with BGD (MF_GD),
- NMF with BCD (NMF_ALS), and
- NMF with BGD (NMF_GD).

For robustness purposes, each and every entity (channel, beamformer, Tx symbol) leading to the dataset Matrix is generated randomly.

Model complexity means the number of latent vectors needed for performing the matrix factorization.

Trained performance is based on tracking the Mean Squared Error (MSE) on the Error function applied on the trainset samples in function of the overhead ratio.

Test Performance analysis is mainly based on tracking the MSE on the Test set samples comprising the unknown entries.

Prediction error is the distance between the maximum measured SNR by an exhaustive search and the predicted maximum SNR.

Results are shown in the above table.

| Table 7: The minimum overhead required for the proposed configurations | | | | | |
|---|---|---|---|---|---|
| Matrix Size | Optimal Model | Min Overhead | Train MSE | Test MSE | Prediction Error |
| 16 by 16 | NMF GD | 0.7 | 1.663786e-06 | 0.158286 | 0.048528 |
| 32 by 32 | NMF GD | 0.6 | 0.000525 | 0.000328 | 0.000243 |
| 64 by 64 | MF GD | 0.3 | 1.005048e-08 | 1.031886e-08 | 1.005227e-08 |
| 128 by 128 | NMF GD | 0.1 | 8.042019e-06 | 1.540287e-05 | 9.044893e-05 |
| 256 by 256 | MF GD | 0.1 | 1.722457e-06 | 2.00182e-06 | 0.001485 |
| 512 by 512 | NMF GD | 0.1 | 3.184227e-07 | 3.534617e-07 | 0.000191 |
| 1024 by 1024 | NMF GD | 0.1 | 1.002663e-08 | 1.0099426e-08 | 0.000 118 |

Those results show that the trained MSE has extremely low values, showing that the 4 models learned predict accurately on the trained samples for all proposed overhead values.

The 4 models illustrate accurate predictions and considerably low distances from the true SNR values.

Thanks to the method according to the invention, it is possible to sound only 10% of the beams and to select a well aligned beam pairs with a very good precision compared to the exhaustive search.

Of course, the invention is not limited to the above-described embodiments.

For example, the method can be applied to a massive antennas system other MIMO. For example, it can be applied to system using Orthogonal frequency-division multiplexing (OFDM). Other applications such as automotive cars industries, massive IoT systems, wireless sensor network and multi-users MIMO are also compatible with this method.

**Claims**

1. Method for selecting beams in a Millimeter-Wave MIMO system (1), the method using at least a transmitter (Tx) antennas codebook indexing a plurality of beam patterns and a receiver (Rx) antennas codebook indexing a plurality of beam patterns, at least one beam pattern (10) being selected among said transmitter antennas codebook and at least one beam pattern being selected among said receiver antennas codebook, said selected beam patterns forming one or more pair of beams, said pair forming a channel for transmitting information between the transmitter antennas and the receiver antennas,
the method comprising at least the following steps:

   a. sounding only a subset of beam pairs chosen among a set of all possible combinations of beam patterns of the transmitter and the receiver antennas codebooks forming beam pairs,
   b. measuring a transmission quality parameter of said subset of beam pairs previously sounded to be indexed in an matrix (S),
   c. applying a learning model on said subset of sounded beam pairs and/or on a predefined training set of beams,

EP 4 210 238 A1

to determine at least two latent vectors corresponding to the factorization of said matrix (S),

d. using said at least previously determined two latent vectors to predict values of said transmission quality parameter of unsounded beam pairs and complete said matrix (S), and

e. comparing all values of said transmission quality parameter of said matrix (S) and selecting the beam pair having the maximum value of transmission quality parameter to form the channel for transmitting information between the transmitter antennas and the receiver antennas.

2. Method according to the preceding claim, the transmission quality parameter may be the Signal to Noise Ratio (SNR) and/or the Received Signal Energy (RSE).

3. Method according to the two preceding claims, the applied learning model being a matrix factorization model and/or a non-negative matrix factorization model.

4. Method according to any one of claims 1 to 3, the learning model being performed by a deep neural network and/or by a convolutional neural network

5. Method according to any one of the preceding claims, the subset of beam pairs corresponding to at most 90%, better at most 75%, better at most 50%, better at most 30%, better at most 20%, for example around 10% of the set of all possible beam pairs of the combinations of beam patterns of the transmitter (Tx) and the receiver (Rx) antennas codebooks.

6. Method according to any one of the preceding claims, the state information of the channel transmitting information between the transmitter (Tx) antennas and the receiver (Tx) antennas being unknown.

7. Method according to any one of the preceding claims, each codebook having more than 16, better than 32, better more than 64, better more than 128, better more than 256, better more than 512, better more than 1024 indexed beam patterns (10).

8. Method according to any one of the preceding claims, said matrix (S) being a low rank matrix.

9. Method according to any one of the preceding claims, the dimension D illustrating the model complexity representing the number of latent factors of the matrix factorization model being smaller than the dimension of the matrix (S).

10. Method according to any one of the preceding claims, coefficients of said at least two latent vectors being determined by using a Block Gradient Descent (BGD) or a Block Coordinate Descent (BCD) method.

11. Method according to any one of the preceding claims, the standard for transmitting information on the channel for transmitting information between the transmitter (Tx) antennas and the receiver (Rx) antennas being 5G or 6G.

12. Computer program product for selecting beams in a Millimeter-Wave MIMO system, using at least a transmitter (Tx) antennas codebook indexing a plurality of beam patterns and a receiver (Rx) antennas codebook indexing a plurality of beam patterns, at least one beam pattern being selected among said transmitter antennas codebook and at least one beam pattern being selected among said receiver antennas codebook, said selected beam patterns forming one or more pair of beams, said pair forming a channel for transmitting information between the transmitter antennas and the receiver antennas,

the computer program product comprising a support and stored on this support instructions that can be read by a processor, these instructions being configured to:

a. Sound only a subset of beam pairs chosen among a set of all possible combinations of beam patterns of the transmitter and the receiver antennas codebooks forming beam pairs,

b. Measure value of a transmission quality parameter of said subset of beam pairs previously sounded to be indexed in an matrix (S),

c. Apply a learning model on said subset of sounded beam pairs and/or on a predefined training set of beams, to determine at least two latent vectors corresponding to the factorization of said matrix (S),

d. Use said at least previously determined two latent vectors to predict values of the transmission quality parameter of unsounded beam pairs and complete said matrix (S), and

e. Compare all values of the transmission quality parameter of said matrix (S) and selecting the beam pair having the maximum value of the transmission quality parameter to form the channel for transmitting information between the transmitter antennas and the receiver antennas.

Fig. 1

Fig. 2

Fig. 3

Subsampled
codebook (BS)

Subsampled
codebook (UE)

SNR per beam-pair

# Fig. 4

$$X[i,j] = \sum_{k=1}^{K} W[i,k] \cdot H[k,j]$$

<u>Fig 5</u>

3/3

Fig 6

Europäisches
Patentamt

European
Patent Office

Office européen
des brevets

# EUROPEAN SEARCH REPORT

Application Number

EP 22 30 5012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAN WAI MING ET AL: "Kolmogorov Model for Large Millimeter-Wave Antenna Arrays: Learning-based Beam-Alignment", 2019 53RD ASILOMAR CONFERENCE ON SIGNALS, SYSTEMS, AND COMPUTERS, IEEE, 3 November 2019 (2019-11-03), pages 411-415, XP033750598, DOI: 10.1109/IEEECONF44664.2019.9048734 [retrieved on 2020-03-26] * page 411 - page 415 * * figures 1, 2, 4, 5 * ----- | 1-12 | INV. H04B7/0456 H04B7/06 H04B7/08 |

TECHNICAL FIELDS
SEARCHED       (IPC)

H04B

The present search report has been drawn up for all claims

| Place of search | Date of completion of the search | Examiner |
|---|---|---|
| Munich | 9 June 2022 | Spinnler, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)